# EUROPÄISCHE PATENTSCHRIFT

(11) **EP 3 278 984 B1**
(45) Veröffentlichungstag und Bekanntmachung des Hinweises auf die Patenterteilung: **20.10.2021**
(21) Anmeldenummer: 17001200.9
(22) Anmeldetag: 13.07.2017
(51) Int. Cl.: C09J 7/40, B32B 7/12, B32B 27/32, B32B 27/08

(54) **RELEASELINER MIT UNTERSCHIEDLICHER OBERFLÄCHENBESCHICHTUNG**
RELEASE LINER WITH DIFFERENT SURFACE COATING
BANDE ANTIADHÉSIF AYANT DES COUCHES DE REVÊTEMENT DIFFÉRENTS

(30) Priorität: 26.07.2016 DE 102016213661
(43) Veröffentlichungstag der Anmeldung: 07.02.2018
(73) Patentinhaber: tesa SE, 22848 Norderstedt (DE)
(72) Erfinder: Neubert, Ingo, 22850 Norderstedt (DE); Klingeberg, Kerstin, 25436 Uetersen (DE); Winkler, Tobias, 22145 Hamburg (DE); Belov, Nikolay, 22175 Hamburg (DE); Sommer, Birgit, 22846 Norderstedt (DE)
(74) Vertreter: tesa SE

(56) Entgegenhaltungen:
- EP-A1- 2 354 203
- DE-A1- 19 548 265
- DE-A1- 19 962 114
- DE-A1-102008 027 502

## Beschreibung

Die Erfindung betrifft das technische Gebiet der Releaseliner, wie sie häufig zum Schutz von Haftklebmassen verwendet werden. Spezifischer betrifft die Erfindung einen Releaseliner, der zwei unterschiedliche Trennbeschichtungen auf seinen beiden Hauptoberflächen aufweist und bei dem sich daher auf jeder Seite spezielle Eigenschaften verwirklichen lassen. Klebebänder, die ein- oder beidseitig mit Klebstoffen beschichtet sind, werden am Ende des Herstellungsprozesses zumeist zu einer Rolle in Form einer archimedischen Spirale aufgewickelt. Um bei doppelseitig klebenden Klebebändern zu verhindern, dass die Haftklebmassen miteinander in Kontakt kommen, oder um bei einseitig klebenden Klebebändern ein leichteres Abrollen zu gewährleisten, wird die Klebmasse vor dem Wickeln des Klebebandes mit einem Abdeckmaterial (auch als Trennmaterial bezeichnet) bedeckt. Dem Fachmann sind derartige Abdeckmaterialien unter den Namen Releaseliner oder Liner bekannt. Neben der Abdeckung von ein- oder doppelseitig klebenden Klebebändern werden Liner auch zur Eindeckung von Etiketten eingesetzt.

Die Releaseliner sorgen des Weiteren dafür, dass die Klebmasse vor der Anwendung nicht verschmutzt wird. Zusätzlich können Releaseliner über die Art und Zusammensetzung der Releasematerialien so eingestellt werden, dass das Klebeband mit der gewünschten Kraft (leicht oder schwer) abgerollt werden kann. Bei beidseitig mit Klebmasse beschichteten Klebebändern sorgen die Releaseliner zusätzlich dafür, dass beim Abrollen die richtige Seite der Klebemasse zuerst freigelegt wird.

Ein Liner oder Releaseliner ist nicht Bestandteil eines Klebebandes oder Etiketts, sondern nur ein Hilfsmittel zu deren Herstellung, Lagerung oder für die Weiterverarbeitung. Darüber hinaus ist ein Liner im Gegensatz zu einem Klebebandträger nicht fest mit einer Klebstoffschicht verbunden.

Als Releaseliner werden industriell Papier- oder Folienträger verwendet, die mit einer abhäsiven Beschichtungsmasse (auch als dehäsive oder anti-adhäsive Masse bezeichnet) ausgerüstet werden, um die Adhäsionsneigung von adhärierenden Produkten gegenüber diesen Oberflächen zu verringern (trennwirksame Funktion). Als abhäsive Beschichtungsmassen, die auch Releasebeschichtung genannt werden, können eine Vielzahl verschiedener Stoffe eingesetzt werden: Wachse, fluorierte oder teilfluorierte Verbindungen und insbesondere Silikone sowie verschiedene Copolymere mit Silikon-Anteilen. In den letzten Jahren haben sich Silikone als Releasematerialien im Bereich der Klebeband-Anwendung auf Grund ihrer guten Prozessierbarkeit, niedrigen Kosten und des breiten Eigenschaftsprofils weitgehend durchgesetzt.

Daneben sind auch Liner mit Polyolefin-Trennschichten in den Fokus des Interesses gerückt.

So beschreibt EP 2 354 203 A1 ein Klebeband, das bei Temperaturen von mindestens 90 °C genutzt werden kann und eine Haftklebmasseschicht mit einem darauf aufgebrachten Releaseliner umfasst. Der Releaseliner umfasst seinerseits eine Basisschicht, die ein Polyolefinharz enthält, und eine Trennschicht (Releaseschicht), die LDPE enthält und sich in Kontakt mit der Haftklebmasseschicht befindet.

EP 2 025 507 A1 beschreibt ein Trennmittel, das ein Ethylen-multi-Blockcopolymer enthält, wobei das Ethylen-multi-Blockcopolymer aus Hartsegmentblöcken, die mindestens 95 % (w/w) Ethylen und ein Comonomer enthalten, und aus Weichsegmentblöcken, die Ethylen und ein Comonomer enthalten, besteht; und wobei der Anteil an Comonomer in den Weichsegmentblöcken zwischen 10 und 20 Mol-% liegt und der Anteil an den Hartsegmentblöcken im Ethylen-multi-Blockcopolymer höchstens 45 % (w/w) beträgt.

EP 2 298 844 A1 beschreibt ein Acrylat-Klebeband mit einem Releaseliner, der eine LDPE-Oberflächenschicht; ein Harzgemisch, das LDPE und HDPE als Harzkomponenten enthält, als zweite Oberflächenschicht; und eine HDPE-Zwischenschicht enthält.

Um das in der Regel unmittelbar vor der Applikation stattfindende Entfernen eines Releaseliners vom Klebeband zu erleichtern, werden die Liner gelegentlich auf ihrer Rückseite (der Abrollseite) mit Anfasshilfen, so genannten "Tabs" versehen. Diese erleichtern das Abziehen des Liners insofern, als nicht erst zwischen Liner und Klebmasse eingedrungen werden muss, um ein Stück Liner greifen und nachfolgend den Liner weiter abziehen zu können; vielmehr genügt ein Greifen des Tabs, um den Liner problemlos entfernen zu können.

Zu diesem Zweck werden die Tabs auf die Linerrückseite derart aufgeschweißt oder angeklebt, dass ein greifbarer Teil des Tabs nicht mit dem Liner verbunden ist, sondern von dessen Oberfläche absteht oder lose auf dieser aufliegt. Derartige Anfasshilfen sind beispielsweise in EP 2 426 185 A1 beschrieben.

Es besteht ein anhaltender Bedarf an Releaselinern mit bestimmten Eigenschaften, die spezifischen anwendungs- und prozesstechnischen Anforderungen genügen sollen.

Aufgabe der Erfindung ist es, einen auch bei erhöhten Temperaturen formstabilen Releaseliner zur Verfügung zu stellen, der eine ausreichende Trennwirkung gegenüber Haftklebmassen, insbesondere gegenüber Polyacrylat-basierten Haftklebmassen, aufweist. Darüber hinaus soll der Liner mit einer Anfasshilfe versehen und mittels dieser problemlos von der Klebmasse abgezogen werden können. Zudem soll der Releaseliner eine ausgewogene Balance zwischen Festigkeit und Flexibilität aufweisen. Zum einen soll er mit seiner Festigkeit einem Überdehnen bzw. Verstrecken des Klebebands bei der Verarbeitung und Applizierung entgegenwirken, zum anderen aber auch noch flexibel genug sein, um das Klebeband mit dem Releaseliner auch in Kurvenform noch ohne Faltenbildung applizieren zu können.

Die Lösung der Aufgabe beruht auf dem Grundgedanken der Erfindung, einen Liner mit speziellem Schichtaufbau zur Verfügung zu stellen. Ein erster und allgemeiner Gegenstand der Erfindung ist ein Releaseliner zur Verwendung auf Haftklebmassen, der
- eine außen liegende Silikon-Releaseschicht (SR);
- eine Lage (POL), die in jeder ihrer Schichten zu insgesamt mindestens 50 Gew.-%, jeweils bezogen auf das Gesamtgewicht der Schicht, ein oder mehrere Polyolefine enthält,
   wobei die Lage (POL) zu mindestens 60 Gew.-%, bezogen auf das Gesamtgewicht der Lage (POL), Polypropylen enthält; und
- eine außen liegende Schicht (PER), die zu mindestens 80 Gew.-%, bezogen auf das Gesamtgewicht der Schicht (PER), Polyethylen enthält,
umfasst, wobei die Schicht (PER) durch einen Klebstoff mit der im Aufbau des Releaseliners nächstfolgenden Schicht verbunden ist und das Polyethylen der Schicht (PER) ein low density-Polyethylen (LDPE) ist und eine Dichte von weniger als 0,925 g/m³ hat.

Erfindungsgemäße Releaseliner haben sich als thermisch sehr stabil erwiesen. Unter anderem war es möglich, die Releaseschicht (SR) erfindungsgemäßer Liner mit einer im Hotmelt-Verfahren verarbeiteten Polyacrylat-Haftklebmasse unmittelbar nach der Verarbeitung zu beschichten, ohne dass es zu nachteiligen Formveränderungen des Releaseliners kam. Auf der mit der Schicht (PER) überzogenen Seite erfindungsgemäßer Liner ließen sich ein oder mehrere Anfasser-Tabs, z.B. aus einem PET/PE- oder einem Aluminium/PET/PE-Verbund, thermisch anschweißen. Der Liner ließ sich anschließend problemlos von Haftklebmassen abziehen, ohne dass der Verbund aus Anfasser und Liner oder der Schichtverbund des Liners dadurch beeinträchtigt wurde.

Unter einer "Haftklebmasse" wird erfindungsgemäß, wie allgemein üblich, ein Stoff verstanden, der - insbesondere bei Raumtemperatur - dauerhaft klebrig sowie klebfähig ist. Charakteristisch für einen Haftklebstoff ist, dass er durch Druck auf ein Substrat aufgebracht werden kann und dort haften bleibt, wobei der aufzuwendende Druck und die Einwirkdauer dieses Drucks nicht näher definiert werden. In manchen Fällen, abhängig von der genauen Art des Haftklebstoffs, der Temperatur und der Luftfeuchtigkeit sowie dem Substrat, reicht die Einwirkung eines kurzfristigen, minimalen Drucks, der über eine leichte Berührung für einen kurzen Moment nicht hinausgeht, um den Haftungseffekt zu erzielen, in anderen Fällen kann auch eine längerfristige Einwirkdauer eines hohen Drucks notwendig sein.

Haftklebstoffe haben besondere, charakteristische viskoelastische Eigenschaften, die zu der dauerhaften Klebrigkeit und Klebfähigkeit führen. Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des Haftklebstoffes als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Anfließem auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander können die mittels Dynamisch Mechanischer Analyse (DMA) ermittelbaren Größen Speichermodul (G') und Verlustmodul (G") herangezogen werden. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel δ bezeichnet.

Der Speichermodul G' ist wie folgt definiert: G' = (τ/γ) •cos(δ) (τ = Schubspannung, γ = Deformation, δ = Phasenwinkel = Phasenverschiebung zwischen Schubspannungs- und Deformationsvektor). Die Definition des Verlustmoduls G" lautet: G" = (τ/γ) •sin(δ) (τ = Schubspannung, γ = Deformation, δ = Phasenwinkel = Phasenverschiebung zwischen Schubspannungs- und Deformationsvektor).

Ein Stoff gilt im Allgemeinen als haftklebrig und wird im Sinne der Erfindung als haftklebrig definiert, wenn bei Raumtemperatur, hier definitionsgemäß bei 23°C, im Deformationsfrequenzbereich von 10° bis 10¹ rad/sec G' zumindest zum Teil im Bereich von 10³ bis 10⁷ Pa liegt und wenn G" ebenfalls zumindest zum Teil in diesem Bereich liegt. "Zum Teil" heißt, dass zumindest ein Abschnitt der G'-Kurve innerhalb des Fensters liegt, das durch den Deformationsfrequenzbereich von einschließlich 10° bis einschließlich 10¹ rad/sec (Abszisse) sowie den Bereich der G'-Werte von einschließlich 10³ bis einschließlich 10⁷ Pa (Ordinate) aufgespannt wird. Für G" gilt dies entsprechend.

Unter einer "außen liegenden Schicht" wird verstanden, dass die betreffende Schicht eine der beiden den Schichtaufbau des Liners nach außen begrenzende Schicht bildet, d.h. über dieser Schicht befindet sich keine weitere zum Aufbau des Liners gehörende Schicht mehr.

Die Silikon-Releaseschicht (SR) (im Folgenden auch einfach: "Silikon-Releaseschicht") lässt sich bevorzugt auf ein vernetzbares Silikonsystem zurückführen. Zu diesen vernetzbaren Silikonsystemen zählen Mischungen aus Vernetzungskatalysatoren und so genannten thermisch härtbaren kondensations- oder additionsvernetzenden Polysiloxanen.

Die Silikon-Releaseschicht kann auf lösungsmittelhaltige und/oder lösungsmittelfreie Systeme zurückgeführt werden, bevorzugt lässt sie sich auf ein lösungsmittelhaltiges System zurückführen.

Die Silikon-Releaseschicht (SR) lässt sich bevorzugt auf ein strahlungs- (UV- oder Elektronenstrahl-), kondensations- oder additionsvernetzendes System zurückführen, besonders bevorzugt auf ein additionsvernetzendes System.

Silikonbasierende Trennmittel auf additionsvernetzender Basis lassen sich in der Regel durch Hydrosilylierung härten. Die Formulierungen zum Herstellen dieser Trennmittel umfassen üblicherweise die folgenden Bestandteile:
- ein Alkenylgruppen enthaltendes, lineares oder verzweigtes Polydiorganosiloxan,
- ein Polyorganowasserstoffsiloxan-Vernetzungsmittel sowie
- einen Hydrosilylierungskatalysator.

Als Katalysatoren für additionsvernetzende Silikonsysteme (Hydrosilylierungs-Katalysatoren) haben sich insbesondere Platin oder Platinverbindungen, wie zum Beispiel der Karstedt-Katalysator (eine Pt(0)-Komplexverbindung) bewährt.

Spezieller können derartige additionsvernetzende Trennbeschichtungen folgende Komponenten umfassen:
a) ein lineares oder verzweigtes Dimethylpolysiloxan, welches aus ca. 80 bis 200 Dimethylpolysiloxan-Einheiten besteht und an den Kettenenden mit Vinyldimethylsiloxy-Einheiten abgestoppt ist. Typische Vertreter sind zum Beispiel lösungsmittelfreie, additionsvernetzende Silikonöle mit endständigen Vinylgruppen, wie Dehesive® 921 oder 610, beide kommerziell erhältlich bei der Wacker-Chemie GmbH;
b) einen linearen oder verzweigten Vernetzer, welcher entweder nur Methylhydrogensiloxy-Einheiten in der Kette aufweist (Homopolymer-Vernetzer) oder aus Methylhydrogensiloxy- und Dimethylsiloxy-Einheiten zusammengesetzt ist (Copolymer-Vernetzer), wobei die Kettenenden entweder mit Trimethylsiloxy-Gruppen oder Dimethylhydrogensiloxy-Gruppen abgesättigt sind. Typische Vertreter dieser Produktklasse sind zum Beispiel Hydrogenpolysiloxane mit hohem Gehalt an reaktivem Si-H wie die Vernetzer V24, V90 oder V06, welche bei der Wacker-Chemie GmbH kommerziell erhältlich sind;
c) ein Silikon-MQ-Harz, welches als M-Einheit neben den üblicherweise verwendeten Trimethylsiloxy-Einheiten auch über Vinyldimethylsiloxy-Einheiten verfügt. Typische Vertreter dieser Gruppe sind zum Beispiel die Trennkraftregler CRA® 17 oder CRA® 42, kommerziell erhältlich bei der Wacker-Chemie GmbH;
d) einen silikonlöslichen Platinkatalysator wie zum Beispiel einen Platindivinyltetramethyldisiloxan-Komplex, welcher üblicherweise als Karstedt-Komplex bezeichnet wird und beispielsweise unter der Bezeichnung Katalysator OL bei der Wacker-Chemie GmbH kommerziell erhältlich ist.

Silikonhaltige Systeme zur Herstellung von Trennbeschichtungen lassen sich, beispielsweise bei Dow Corning, Wacker oder Rohm&Haas, kommerziell erwerben.

Beispielhaft sei "Dehesive® 914" genannt, das ein Vinylpolydimethylsiloxan, den Vernetzer "Crosslinker V24", ein Methylhydrogenpolysiloxan und den Katalysator "Catalyst Ol", einen Platin-Katalysator in Polydimethylsiloxan, enthält. Dieses System ist bei der Wacker-Chemie GmbH erhältlich.

Verwendbar ist des Weiteren zum Beispiel das additionsvernetzende Silikon-Release-System "Dehesive® 940A" der Wacker-Chemie mit einem zugehörigen Katalysatorsystem.

Üblicherweise wird das Silikon-Release-System im unvernetzten Zustand aufgetragen und nachträglich vernetzt.

Von den genannten Silikonen haben die additionsvernetzenden Silikone die größte ökonomische Bedeutung. Eine unerwünschte Eigenschaft dieser Systeme ist allerdings ihre Empfindlichkeit gegenüber Katalysatorgiften, wie zum Beispiel Schwermetall-, Schwefel- und Stickstoffverbindungen (vgl. hierzu "Chemische Technik, Prozesse und Produkte" von R. Dittmeyer et al., Band 5, 5. Auflage, Wiley-VCH, Weinheim, Deutschland, 2005, Kapitel 6-5.3.2, Seite 1142). Allgemein gilt, dass Elektronendonatoren als Platingifte angesehen werden können (A. Colas, Silicone Chemistry Overview, Technical Paper, Dow Corning). Demnach sind auch Phosphorverbindungen wie Phosphine und Phosphite als Platingifte anzusehen. Die Präsenz von Katalysatorgiften führt dazu, dass die Vernetzungsreaktion zwischen den unterschiedlichen Bestandteilen eines Silikontrennmittels nicht mehr oder nur zu einem geringen Teil stattfindet. Daher wird bei der Herstellung von antiadhäsiven Silikonbeschichtungen die Anwesenheit von Katalysatorgiften, insbesondere von Platingiften, in der Regel streng vermieden.

Besondere Ausführungen der Silikonsysteme sind Polysiloxan-Blockcopolymere, zum Beispiel mit Harnstoff-Block, wie sie von der Firma Wacker unter dem Handelsnamen "Geniomer" angeboten werden, oder Trennsysteme aus Fluorsilikonen, die insbesondere bei Klebebändern mit Silikonklebmassen eingesetzt werden.

Weiterhin können auch photoaktive Katalysatoren, so genannte Photoinitiatoren, in Kombination mit UV-härtbaren kationisch vernetzenden Siloxanen auf Epoxid- und/oder Vinyletherbasis beziehungsweise mit UV-härtbaren radikalisch vernetzenden Siloxanen wie etwa acrylatmodifizierten Siloxanen verwendet werden. Ebenso ist die Verwendung von elektronenstrahlhärtbaren Silikonacrylaten möglich.

Auch photopolymerisierbare Organopolysiloxanmassen können verwendet werden. Genannt seien beispielsweise Massen, die durch die Reaktion zwischen Organopolysiloxanen, die mit (Meth)acrylatgruppen substituierte, direkt an Siliziumatome gebundene Kohlenwasserstoffreste aufweisen, in Gegenwart eines Photosensibilisators vernetzt werden (siehe z.B. EP 0 168 713 B1 oder DE 38 20 294 C1). Ebenfalls verwendbar sind Massen, bei denen die Vernetzungsreaktion zwischen Organopolysiloxanen, die mit Mercaptogruppen substituierte, direkt an Siliziumatome gebundene Kohlenwasserstoffreste aufweisen, und Organopolysiloxanen mit direkt an Siliziumatome gebundenen Vinylgruppen in Gegenwart eines Photosensibilisators erfolgt. Solche Massen werden beispielsweise in der US 4,725,630 beschrieben.

Beim Einsatz von zum Beispiel in der DE 33 16 166 C1 beschriebenen Organopolysiloxanmassen, die mit Epoxygruppen substituierte, direkt an Siliziumatome gebundene Kohlenwasserstoffreste aufweisen, wird die Vernetzungsreaktion durch Freisetzung einer katalytischen Säuremenge induziert, die durch Photozersetzung zugesetzter Oniumsalzkatalysatoren erhalten wird. Andere durch einen kationischen Mechanismus härtbare Organopolysiloxanmassen sind Materialien, welche zum Beispiel Propenyloxysiloxanendgruppen aufweisen.

Die Silikonsysteme können je nach Verwendungszweck auch weitere Zusätze, zum Beispiel Stabilisatoren oder Verlaufshilfsmittel, enthalten.

Der erfindungsgemäße Releaseliner enthält eine Lage (POL), die zu mindestens 60 Gew.-%, bezogen auf das Gesamtgewicht der Lage (POL), Polypropylen enthält. Unter einer "Lage" wird ein ein- oder mehrschichtiger Teil des Schichtaufbaus des erfindungsgemäßen Releaseliners verstanden, wobei im Falle einer mehrschichtigen Lage die Schichten dieser Lage unmittelbar aufeinander folgen. Die Lage (POL) enthält in jeder ihrer Schichten zu insgesamt mindestens 50 Gew.-% ein oder mehrere Polyolefine. Der Ausdruck "enthaltend in jeder ihrer Schichten" erfasst entsprechend dem Vorstehenden auch eine einschichtige Lage und ist in diesem Fall als "enthaltend in der Schicht" zu verstehen.

Bevorzugt umfasst die Lage (POL) eine Schicht (PPK), die zu mindestens 60 Gew.-%, stärker bevorzugt zu mindestens 65 Gew.-%, insbesondere zu mindestens 70 Gew.-%, beispielsweise zu mindestens 75 Gew.-%, jeweils bezogen auf das Gesamtgewicht der Schicht, Polypropylen enthält. Es hat sich gezeigt, dass sich derartige Polypropylengehalte vorteilhaft auf die thermische Stabilität der Schicht (PPK), der gesamten Lage (POL) und des erfindungsgemäßen Releaseliners auswirken. Besonders bevorzugt besteht die Schicht (PPK) aus Polypropylen, das zu maximal 15 Gew.-%, stärker bevorzugt zu maximal 12 Gew.-% mit Kautschuk und zu maximal 15 Gew.-%, stärker bevorzugt zu maximal 10 Gew.-%, mit Farbmitteln abgemischt ist.

Bevorzugt ist die Schicht (PPK) eine Polypropylenfolie. Die Polypropylenfolie kann mittels Pigmenten oder organischem Farbstoff, die in Form eines Farbmasterbatches zugegeben wurden, eingefärbt sein. Bevorzugt enthält die Polypropylenfolie, wie vorstehend schon beschrieben, zu maximal 15 Gew.-%, stärker bevorzugt zu maximal 12 Gew.-%, jeweils bezogen auf das Gesamtgewicht der Polypropylenfolie, Kautschuk. Insbesondere besteht die Polypropylenfolie aus einem heterophasic Polypropylen-Copolymer mit einem Kautschukanteil von maximal 15 Gew.-% und einem Farbmittelanteil von maximal 15 Gew.-%, stärker bevorzugt mit einem Kautschukanteil von maximal 12 Gew.-% und einem Farbmittelanteil von maximal 10 Gew.-%. Der Kautschuk ist bevorzugt ein EPM-Kautschuk.

Besonders bevorzugt ist die Schicht (PPK) eine Polypropylenfolie mit einer Schmelztemperatur von mindestens 160 °C. Das Polypropylen der Schicht (PPK) ist bevorzugt ein sogenanntes heterophasic PP-Copolymer (HECO PP, Impact PP). Ein derartiges Copolymer weist insbesondere eine hohe Temperaturstabilität auf. Die Temperaturstabilität, die sich aus der Schmeltztemperatur ergibt, ist vergleichbar mit der von reinem Homo-PP. Ein heterophasic PP-Copolymer zeichnet sich aber durch eine bessere Flexibilität sowie geringere Festigkeit und geringere Sprödigkeit aus. Das wird durch eine Copolymerisation von Homo-PP mit einem EP-Kautschuk erreicht.

In einer Ausführungsform des erfindungsgemäßen Releaseliners umfasst die Lage (POL) eine Schicht (PPK) und eine Polyolefinschicht (POK), enthaltend mindestens 25 Gew.-%, stärker bevorzugt mindestens 30 Gew.-%, insbesondere mindestens 35 Gew.-% Poylethylen sowie mindestens 20 Gew.-%, stärker bevorzugt mindestens 30 Gew.-%, insbesondere mindestens 50 Gew.-% Polypropylen, jeweils bezogen auf das Gesamtgewicht der Polyolefinschicht (POK). Ganz besonders bevorzugt enthält die Polyolefinschicht (POK) mindestens 70 Gew.-%, stärker bevorzugt mindestens 80 Gew.-%, insbesondere mindestens 90 Gew.-%, jeweils bezogen auf das Gesamtgewicht der Polyolefinschicht (POK), eines Gemischs aus Polyethylen und Polypropylen in einem Gewichtsverhältnis PP / PE von 40 / 60 bis 80 / 20, insbesondere von 50 / 50 bis 70 / 30, beispielsweise von 55 / 45 bis 65 / 35. Besonders bevorzugt besteht die Polyolefinschicht (POK) aus einem solchen Gemisch aus Polypropylen und Polyethylen.

Die Begriffe "Polyolefinschicht (POK)" und "Schicht (POK)" bezeichnen im vorliegenden Text dieselbe Schicht.

Besonders bevorzugt ist das Polypropylen der Polyolefinschicht (POK) ein heterophasic PP-Copolymer, z.B. ein Impact Polypropylen. Das Polyethylen der Polyolefinschicht(POK) ist bevorzugt ein mPE, insbesondere ein LLDPE. Über das Blendverhältnis können vorteilhaft die mechanischen Eigenschaften eines Verbundes aus jeweils einer oder mehreren Schichten (PPK) und (POK), insbesondere dessen Festigkeit, feinjustiert werden. Die mechanischen Eigenschaften dieses Verbundes wirken sich insbesondere bei einer Beschichtung des Verbundes mit der zur Ausbildung der Schicht (SR) vorgesehenen Silikonreleasemasse und/oder der zur Ausbildung der Schicht (PER) vorgesehenen Masse aus. Besonders positiv kommt dies bei der Applikation des erfindungsgemäßen Releaseliners zur Geltung, insbesondere bei dessen maschineller Verarbeitung und bei dessen Anwendung, wenn ein damit abgedecktes Klebeband um Kurven verklebt wird. Besonders vorteilhaft weist der Releaseliner bzw. zumindest der beschriebene Verbund eine gute Dehnfestigkeit auf und wirkt auf diese Weise einer Verstreckung bzw. Überdehnung des Klebebands bei dessen Applikation und Verarbeitung entgegen. Bemerkenswert ist, dass ein Verbund aus den Schichten (PPK) und (POK) insofern eine besonders gute Balance zwischen den beiden gegensätzlichen Eigenschaften Dehnfähigkeit und Dehnfestigkeit erreicht.

In einer Ausführungsform umfasst die Lage (POL) eine Schicht (PPK), auf deren Ober- und Unterseite jeweils eine Schicht (POK) in unmittelbarem Kontakt zu der Schicht (PPK) angeordnet ist. Die beiden Schichten (POK) bestehen dabei bevorzugt aus identischem Material. Bevorzugt liegen also die beiden Schichten (POK) und die Schicht (PPK) als Schichtverbund derart vor, dass die Schicht (PPK) eine zentrale Schicht bildet, auf deren Ober- und Unterseite jeweils eine Schicht (POK) angeordnet ist, wobei sich die Schichten (POK) jeweils in unmittelbarem Kontakt mit der Schicht (PPK) befinden. Dieser Dreischichtverbund liegt besonders bevorzugt als coextrudierte Folie vor. Insbesondere wird der Verbund als Blasfolie hergestellt, kann aber auch im Flachfolienprozess als Flachfolie hergestellt werden.

In einer weiteren Ausführungsform umfasst die Lage (POL) eine Schicht (POK), auf deren Ober- und Unterseite jeweils eine Schicht (PPK) in unmittelbarem Kontakt zu der Schicht (POK) angeordnet ist. Die beiden Schichten (PPK) bestehen dabei bevorzugt aus identischem Material. Auch dieser Dreischichtverbund liegt besonders bevorzugt als coextrudierte Folie vor. Insbesondere wird der Verbund als Blasfolie hergestellt, kann aber auch im Flachfolienprozess als Flachfolie hergestellt werden.

Insbesondere haben in beiden Ausführungsformen, also sowohl im Aufbau (POK)-(PPK)-(POK) als auch im Aufbau (PPK)-(POK)-(PPK) die jeweils äußeren Schichten eine identische Schichtdicke, wobei herstellungs- bzw. verfahrensbedingte Abweichungen unbeachtlich sind. Derartige symmetrische Aufbauten zeigen im Gegensatz zu asymmetrischen Aufbauten keine Rollneigung, wie sie bei letzteren gerade unter Temperaturbelastung häufig beobachtet wird.

Bevorzugt weisen die Rohstoffe für die Herstellung der Schichten (PPK) und (POK) und damit insbesondere die Schicht (PPK) bzw. die Schichten (PPK) und (POK) gewichtsbezogen weniger als 1000 ppm an Katalysatorgiften bezüglich des Hydrosilylierungskatalysators der Schicht (SR) auf. Andernfalls kann es zu Störungen der Silikonvernetzung kommen, wodurch die Releaseeigenschaften der Schicht (SR) gestört werden können. Als Katalysatorgifte kommen insbesondere Phosphor- und Stickstoff-haltige Verbindungen, z.B. Phosphit-Stabilisatoren wie Irgafos 168 oder Irgafos TNPP, Gleitmittel oder Antistatika mit Amid- oder Amin-Funktionalitäten, z.B. Erucamid, in Frage. Besonders bevorzugt sind die Rohstoffe für die Herstellung der Schicht (PPK) bzw. der Schichten (PPK) und (POK) und damit insbesondere die Schicht (PPK) bzw. die Schichten (PPK) und (POK) frei von Katalysatorgiften bezüglich des Hydrosilylierungskatalysators der Schicht (SR).

Die Dicke der jeweils zentralen Schicht im Aufbau (POK)-(PPK)-(POK) oder (PPK)-(POK)-(PPK) beträgt bevorzugt jeweils 40 bis 80 µm, stärker bevorzugt 50 bis 70 µm, insbesondere 55 bis 65 µm, ganz besonders bevorzugt 57 bis 63 µm. Die Dicke der jeweils äußeren Schichten im Aufbau (POK)-(PPK)-(POK) oder (PPK)-(POK)-(PPK) beträgt jeweils unabhängig bevorzugt 10 bis 30 µm, insbesondere 15 bis 25 µm, ganz besonders bevorzugt 17 bis 23 µm. Das Verhältnis der Schichtdicken der jeweils zentralen Schicht und einer der äußeren Schichten im Aufbau (POK)-(PPK)-(POK) oder (PPK)-(POK)-(PPK) beträgt bevorzugt 10:3 bis 10:1.

Der erfindungsgemäße Liner umfasst ferner mindestens eine außen liegende Schicht (PER), die zu mindestens 80 Gew.-% Polyethylen enthält. Bevorzugt enthält die Schicht (PER) zu mindestens 90 Gew.-%, stärker bevorzugt zu mindestens 95 Gew.-%, insbesondere zu mindestens 98 Gew.-%, beispielsweise zu mindestens 99 Gew.-%, jeweils bezogen auf das Gesamtgewicht der Schicht (PER), Polyethylen. Ganz besonders bevorzugt besteht die Schicht (PER) aus Polyethylen. Insbesondere ist die Schicht (PER) eine Polyethylenfolie. Die Schicht (PER) kann dabei auch aus einem Blend bzw. einer Mischung aus unterschiedlichen Polymeren bestehen.

Das Polyethylen der Schicht (PER) ist ein low-density-PE (LDPE). Besonders bevorzugt besteht die außen liegende Schicht (PER) aus LDPE, insbesondere ist die Schicht (PER) eine LDPE-Folie. Insbesondere ist die Schicht (PER) eine LDPE-Folie mit einer Dicke von 10 bis 45 µm, ganz besonders bevorzugt mit einer Dicke von 20 bis 40 µm, beispielsweise von 24 bis 33 µm.

Bevorzugt ist die Polyethylenfolie der Schicht (PER) eine Blasfolie. Die Polyethylenfolie (PER) kann auch eine Mehrschichtfolie, z.B. eine Dreischichtfolie sein. Im letzteren Fall besteht die Folie aus drei PE-Schichten.

Das LDPE der Schicht (PER) hat eine Dichte von weniger als 0,925 g/cm³, insbesondere von weniger als 0,92 g/cm³. Eine derart ausgestattete Schicht (PER) weist besonders geringe Trennkräfte bzw. Abrollkräfte gegenüber Haftklebmassen auf; daher kann auf eine zusätzliche Silikon-Releasebeschichtung verzichtet werden. Die Schicht (PER) weist daher auch eine besonders hohe Hitzebeständigkeit auf. Daraus wiederum ergibt sich vorteilhaft die Möglichkeit, eine Anfasshilfe durch einen effizienten Heißsiegelprozess auf die Schicht (PER) aufzubringen. Bevorzugt ist daher auf zumindest einem Teil der Schicht (PER) eine Anfasshilfe aufgebracht.

Die Schicht (PER) des erfindungsgemäße Releaseliners ist durch einen Klebstoff mit der im Aufbau des Releaseliners nächstfolgenden Schicht verbunden. Es hat sich gezeigt, dass damit eine im Vergleich zu alternativen Methoden zur Einbeziehung der Schicht (PER) in den Schichtverbund des Releaseliners wesentlich verbesserte Verbundhaftung erzielt wird. Alternative Methoden zur Einbeziehung der Schicht (PER) in den Schichtverbund des Releaseliners sind beispielsweise Coextrusion der Schicht (PER) mit der bzw. den benachbarten Schicht(en) oder eine Extrusionsbeschichtung.

Der Klebstoff lässt sich als Kaschier- oder Laminierklebstoff ansehen und ist grundsätzlich in der Bandbreite einsetzbarer Klebstoffe nicht eingeschränkt, solange sich die Schicht (PER) und die im Aufbau des Liners nächstfolgende Schicht damit anforderungsgerecht verbinden lassen. Die Schicht (PER) ist bevorzugt mit einer Schicht (PPK) oder (POK) durch einen Klebstoff verbunden. Insbesondere ist die Schicht (PER) mit einer der jeweils äußeren Schichten im vorstehend beschriebenen Aufbau (POK)-(PPK)-(POK) oder (PPK)-(POK)-(PPK) der Lage (POL) durch einen Klebstoff verbunden.

Als Klebstoff kommen grundsätzlich alle im Stand der Technik bekannten lösemittelhaltigen, lösemittelfreien und wässrigen Klebstoffe mit unterschiedlicher Polymerbasis, z.B. Polyurethan, Polyester, Polyethylen oder Ethylenvinylacetat, in Frage. Bevorzugt ist der Klebstoff ein Polyurethan-basierter Klebstoff. "Polyurethan-basiert" bedeutet hier, dass ein Polyurethan oder die Gesamtheit mehrerer Polyurethane den Hauptbestandteil der Polymerzusammensetzung dieses Klebstoffs bilden, also den größten Anteil an der Polymerzusammensetzung haben.

Lösemittelfreie Polyurethan-Klebstoffe können als Ein- oder Zwei-Komponentensysteme vorliegen. Weitere Unterschiede können sich aus der Struktur des Polyurethans und der Art der Vernetzung ergeben. Häufig werden folgende Polymere bevorzugt:
- 1-K System: Prepolymere mit geringem Molekulargewicht, NCO-terminiert, feuchtigkeitsvernetzend;
- 2-K System: Prepolymere mit NCO Endgruppen + Polyole.

Häufig werden aromatische Isocyanate verwendet, diese sind aber problematisch im Lebensmittelkontakt, da es dabei zur Bildung von primären aromatischen Aminen kommen kann. Gelegentlich kommen daher - insbesondere auch, wenn UV-Stabilität verlangt ist - aliphatische Isocyanate zum Einsatz. Grundsätzlich lassen sich mit aromatischen Isocyanaten bessere Haftung und schnellere Aushärtung erzielen.

Polyether-Polyurethane haben meistens eine höhere Temperaturstabilität als Polyester-Polyurethane. Oft besteht aber die Polyolkomponente aus einem Gemisch aus Polyester- und Polyether-Polyolen. Häufig werden auch tri- und höher funktionalisierte Polyole eingesetzt, um zusätzliche Vernetzungseffekte zu generieren, was sich wiederum häufig in höherer Temperaturstabilität auswirkt.

Der Klebstoff der beschriebenen Ausführungsform der Erfindung ist bevorzugt ein Polyether-Polyurethan-basierter Klebstoff, der auf einem lösemittelfreien 2-K System beruht. Es hat sich als vorteilhaft herausgestellt, einen mittels Klebstoff hergestellten Verbund aus den Schichten (PER) und (PPK) bzw. (PER) und (POK) mehrere Tage ruhen zu lassen, um das Erreichen der vollen Verbundfestigkeit abzuwarten. Ebenso hat es sich als vorteilhaft herausgestellt, die miteinander zu verklebenden Flächen vor dem Verkleben einer Corona-Vorbehandlung zu unterziehen.

Ein besonderer Vorteil einer Verklebung der Schicht (PPK) bzw. (POK) mit der Schicht (PER) besteht in der deutlich höheren Verbundfestigkeit gegenüber einer Coextrusion beider Schichten. Eine Coextrusion dieser Schichten hat sich als möglich erwiesen, führte jedoch zu geringeren Verbundfestigkeiten. Eine gewisse Verbesserung der Verbundfestigkeit kann durch Modifikation einer oder beider Schichten mit sogenannten Haftvermittlern, z.B. Maleinsäure-modifizierten Polymeren, oder durch Verwendung einer zusätzlichen Haftvermittlerschicht, des sogenannten Tie-Layers, erzielt werden. Trotz dieser Maßnahmen ist die Verbundhaftung für die Anwendung zu gering, so dass ein Delaminieren der Schicht (PER) beim Versuch, den Liner mittels eines Tabs vom Klebeband abzuziehen, beobachtet wird.

Ein weiterer Gegenstand der Erfindung ist die Verwendung eines erfindungsgemäßen Releaseliners zum Schutz von Haftklebmassen. Der erfindungsgemäße Releaseliner ist grundsätzlich zur Verwendung auf allen bekannten Haftklebmassen geeignet. Bevorzugt wird der erfindungsgemäße Releaseliner zum Bedecken bzw. zum Schutz von Poly(meth)acrylat enthaltenden Haftklebmassen verwendet. Besonders bevorzugt ist die Verwendung eines erfindungsgemäßen Releaseliners als Substrat einer Beschichtung mit der Schmelze einer Poly(meth)acrylat-basierten Haftklebmasse, wobei die Silikon-Releaseschicht (SR) beschichtet wird. Ganz besonders bevorzugt wird der erfindungsgemäße Releaseliner nach der Beschichtung mit der Schmelze einer Poly(meth)acrylat-basierten Haftklebmasse auch zum Schutz dieser Haftklebmasse verwendet. "Poly(meth)acrylat-basierte Haftklebmasse" bedeutet, dass die Haftklebmasse insgesamt mindestens 30 Gew.-%, bevorzugt mindestens 50 Gew.-%, insbesondere mindestens 60 Gew.-% Poly(meth)acrylat enthält. Ebenfalls im Sinne der Erfindung sind Kombinationen und Blends mehrerer Basispolymere sowie mit Klebharzen, Füllstoffen, Alterungsschutzmitteln, Vernetzern etc. additivierte Klebemassen

Die zur Verwendung mit dem erfindungsgemäßen Releaseliner vorgesehenen Haftklebmassen können selbstverständlich ohne (sogenanntes Transferklebeband) oder mit Träger verwendet werden. Als Träger kommen alle für diese Aufgabe bekannten Materialien in Betracht, insbesondere auch geschäumte, Poly(meth)acrylat-basierte Haftklebmassen.

### Beispiele

### Aufbau der Releaseliner (wenn nicht anders angegeben: Angaben in Gew.-%)

### Liner 1:

Es wurde von einer dreischichtigen Blasfolie (entspricht "POL") mit folgendem Aufbau ausgegangen:
20 µm Blend aus 40 % LLDPE (Eltex PF6130, INEOS) und 60 % PP (BA110CF, Borealis) (entspricht "POK")
60 µm 92 % PP (BA110CF, Borealis) und 8 % Farbbatch (entspricht "PPK")
20 µm Blend aus 40 % LLDPE (Eltex PF6130, INEOS) und 60 % PP (BA110CF, Borealis) (entspricht "POK").

Die vorgenannte Dreischichtfolie wurde einseitig Corona-vorbehandelt. Anschließend wurde ein Zwei-Komponenten-Polyurethan-Kaschierklebstoffsystem (Liofol UR 7780 / UR6080, Henkel) über Rasterwalzen bei 40 °C mit einem Flächengewicht von 2 g/m² auf die vorbehandelte Seite aufgetragen. Darauf wurde eine 28 µm dicke Blasfolie (entspricht "PER") aus LDPE (Purell 1840H, LyondellBasell) kaschiert. Die Verklebung wurde 10 Tage bei Raumtemperatur ausgehärtet.

Die verbliebene Seite der vorstehenden Dreischichtfolie wurde mit einem additionsvernetzenden Silikonsystem gemäß der untenstehenden Anleitung mit einem Flächengewicht von 1 g/m² beschichtet (entspricht "SR").

### Liner 1a:

Es wurde von einer dreischichtigen Blasfolie mit folgendem Aufbau ausgegangen:
20 µm 100 % PP (BA110CF, Borealis)
60 µm Blend aus 26 % LLDPE (Eltex PF6130, INEOS) und 66 % PP (BA110CF, Borealis) und 8 % Farbbatch
20 µm 100 % PP (BA110CF, Borealis)

Die weitere Behandlung der Folie und der Aufbau des Releaseliners erfolgten analog zu Liner 1.

### Liner 1b

Die eingesetzte Folie und die weiteren Schritte zum Aufbau des Releaseliners entsprechen Liner 1 mit der Ausnahme, dass die Dreischichtfolie beidseitig Corona-behandelt und ebenfalls beidseitig mittels Kaschierkleber mit der LDPE-Blasfolie analog Beispiel 1 versehen wurde, wobei dieselben Materialien wie in Liner 1 eingesetzt wurden. Anschließend wurde einseitig analog zu Liner 1 silikonisiert.

### Liner 2:

Es wurde wie bei Liner 1 vorgegangen mit der Ausnahme, dass als Kaschierklebstoff MP985 (-NCO) / MP730 (-OH), Bostik) verwendet wurde.

### Liner 3 (Vergleichsbeispiel):

Es wurde von einer dreischichtigen Blasfolie mit folgendem Aufbau ausgegangen:
20 µm LDPE (Purell 1840H, LyondellBasell)
80 µm Blend aus 62 % PP (BA110CF, Borealis), 30 % LLDPE (Eltex PF6130, INEOS) und 8 % Farbbatch)
20 µm LDPE (Purell 1840H, LyondellBasell).

Eine Seite dieser Dreischichtfolie wurde analog zu Liner 1 silikonisiert.

### Liner 4 (Vergleichsbeispiel)

Es wurde von der dreischichtigen Blasfolie des Liners 1 ausgegangen.

Diese Folie wurde einseitig mit einer auf 300 °C temperierten LDPE-Schmelze (LD 251, ExxonMobil) beschichtet (Extrusionsbeschichtung), nachdem die zur Beschichtung vorgesehene Seite frisch mit Corona vorbehandelt wurde. Zusätzlich wurde unmittelbar vor der Beschichtung auf die Blasfolie Ozon auf die heiße LDPE-Schmelze geblasen.

Die unbeschichtete Seite der Folie wurde analog zu Liner 1 silikonisiert.

### Liner 5 (Vergleichsbeispiel)

Es wurde von einer dreischichtigen Blasfolie mit folgendem Aufbau ausgegangen:
20 µm LDPE (Purell 1840H, LyondellBasell)
80 µm HDPE (92 % Hostalen GF 9055F, 8 % Farbbatch)
20 µm LDPE (Purell 1840H, LyondellBasell).

Eine Seite dieser Dreischichtfolie wurde analog zu Liner 1 silikonisiert.

### Liner 6 (Vergleichsbeispiel)

Es wurde analog zu Liner 1b vorgegangen. Eine Silikonisierung erfolgte jedoch nicht.

### Liner 7 (Referenzbeispiel)

Es wurde wie bei Liner 1 vorgegangen mit der Ausnahme, dass die LDPE-Blasfolie aus LD157CW (ExxonMobil, Dichte 0,931 g/cm³) bestand.

Herstellung und Auftragen der Silikon-Releaseschicht:
1.002 g der PDMS-basierten Silikonklebmasse DC 7651 (Dow Corning) wurden mit 598 g MQ-Klebharz DC 7066 (Dow Corning), 80 g Si-H-Vernetzer Syl-Off 7678 (Dow Corning) und 50 g Platin-Katalysator Syl-Off 4000 (Dow Corning) versetzt. Die Mischung wurde mit 1179 g Benzin verdünnt und 30 Minuten homogenisiert. Die erhaltene Mischung wurde über ein 3-Walzen-Auftragswerk mittels einer Gravurwalze als Schicht von 1 g/m² auf dem Substrat aufgebracht und bei 120 °C für 30 Sekunden vernetzt.

### Prüfmethoden

### - Beschichtbarkeit der Liner mit Klebmasse:

Die silikonisierte Seite der Liner 1 - 5 und 7 sowie eine Seite des Liners 6 wurden jeweils mit einer geschäumten Polyacrylat-basierten Haftklebmasse im Hotmelt-Verfahren beschichtet, d.h. die Haftklebmasse wurde in geschmolzenem Zustand bei einer Temperatur von 125 - 135 °C aufgetragen.

Die Polyacrylat-Haftklebmasse wurde wie folgt hergestellt:
Herstellung Polyacrylat-Basispolymer:
Ein für radikalische Polymerisationen konventioneller Reaktor wurde mit 72,0 kg 2-Ethylhexylacrylat, 20,0 kg Methylacrylat, 8,0 kg Acrylsäure und 66,6 kg Aceton/ Isopropanol (94:6) befüllt. Nach 45minütiger Durchleitung von Stickstoffgas unter Rühren wurde der Reaktor auf 58 °C hochgeheizt und 50 g AIBN, gelöst in 500 g Aceton, hinzugegeben. Anschließend wurde das äußere Heizbad auf 75 °C erwärmt und die Reaktion konstant bei dieser Außentemperatur durchgeführt. Nach 1 h wurden erneut 50 g AIBN, gelöst in 500 g Aceton, zugegeben, und nach 4 h wurde mit 10 kg Aceton/Isopropanol-Gemisch (94:6) verdünnt.

Nach 5 h sowie nach 7 h wurde jeweils mit 150 g Bis-(4-*tert*-butylcyclohexyl)-peroxydicarbonat, jeweils gelöst in 500 g Aceton, nachinitiiert. Nach 22 h Reaktionszeit wurde die Polymerisation abgebrochen und auf Raumtemperatur abgekühlt. Das Produkt hatte einen Feststoffgehalt von 55,8 % und wurde getrocknet. Das resultierende Polyacrylat hatte einen K-Wert von 58,9, ein mittleres Molekulargewicht von Mw = 748.000 g/mol, eine Polydispersität von D (Mw/Mn) = 8,9 und eine statische Glasübergangstemperatur von Tg = - 35,2 °C.

In einen Planetwalzenextruder mit vier Mischzonen wurden über zwei Feststoffdosierer der Synthesekautschuk Kraton D1102 und das Kohlenwasserstoffharz Piccolyte A115 als Granulat in den Einzugsbereich eingegeben und in der ersten Mischzone zu einer homogenen Masse gemischt. In der folgenden Zone wurde das Polyacrylat-Basispolymer zugeführt, das in einem Einschneckenextruder vorgewärmt wurde. Anschließend wurde mittels einer Harzschmelze das Terpenphenolharz Dertophen T105 zudosiert. Die Mischung wurde in einen Doppelschneckenextruder überführt und dort mit einer Vernetzer- (Polypox R16 20 % in Rheofos RDP) und Beschleuniger- (20 % Epicure 925 in Rheofos RDP) Lösung versetzt. Es folgte die Zugabe einer Mikroballonpaste (50 % Expancel 051DU40 in Ethomeen C25). Die Schmelze mit einer Temperatur von 125 - 135 °C wurde über einen Zweiwalzenkalander auf die dafür vorgesehene Seite des jeweiligen Releaseliners beschichtet.

Nach einer Lagerung/Reifezeit von drei Wochen bei Raumtemperatur resultierte ein einschichtiges Klebeband (nachfolgend: Testtape) mit einer Schichtdicke von 1000 µm und einer Dichte von 700 kg/m³. Die Zusammensetzung lag bei 42 % Polyacrylat, 10 % Kraton D1102, 25 % Dertophen T105, 15 % Piccolyte A115, 2 % Vernetzer-/Beschleuniger-Lösung (Vernetzer:Beschleuniger = 1:1), 6 % Mikroballonpaste (Angaben in Gew.-%).

### - Delaminieren

Der zu testende Liner wird auf eine Breite von 15 mm zugeschnitten. Ein ebenfalls 15 mm breiter Tab aus PET/PE-Laminat (alternativ kann auch ein Aluminium/PET/PE-Laminat verwendet werden) wird bei 190 °C für 3 Sekunden und 3 bar Druck mittels eines Metallstempels mit einer Fläche von 15 x 15 mm auf das zu testende Material verschweißt.

Nach Auskühlung des geschaffenen Verbunds wird dieser freihängend (T-Peel) mit einer Geschwindigkeit von 300 mm/min auseinander gezogen. Dabei wird die Kraft aufgezeichnet, die benötigt wird, um den Verbund zwischen Tab und Liner zu trennen. Aus dieser Messung werden zwei Messwerte erhalten:
- ein höherer Anfangspeak, der dem initialen Delaminieren entspricht, und
- ein konstanter Messwert, der der realen Delaminationskraft der beiden Materialien entspricht. Es werden immer beide Messwerte angegeben.

### - Kraft-Dehnungs-Verhalten nach DIN 527-1

Der zu testende Liner wird auf eine Breite von 15 mm und auf 25 cm Länge zugeschnitten. Der Liner wird in eine Zugprüfmaschine mit einem Klemmbackenabstand von 50 mm spannungsfrei eingespannt und anschließend mit einer Geschwindigkeit von 150 mm/min bis zum Bruch bzw. bis zur maximalen Verfahrenslänge der Zugprüfmaschine auseinander gezogen. Dabei werden die mechanischen Kennwerte des zu prüfenden Liners aufgezeichnet.

### - Anwendungstechnischer Test (Tabbing Test)

Zwei Streifen des mit dem Liner versehenen Testtapes werden in einem Abstand von ca. 1 cm in Längsrichtung hintereinander auf das gewünschte Substrat aufgebracht. Ein Tab wird als Anfasser auf den Anfangsbereich des ersten Liners aufgebracht. Daneben werden beide Liner mit einer Brücke aus einem Tab verbunden, indem das eine Ende des Tabs auf den Endbereich des ersten Liners und das andere Ende des Tabs auf den Anfangsbereich des zweiten Liners des anderen Steifens aufgeschweißt wird.

Die Verschweißung wird bei 190 °C, 3 bar Druck und 3 Sekunden Verschweißzeit mittels eines Metallstempels durchgeführt. Als Tab und Bridge wird ein PET/PE-Laminat verwendet (alternativ kann auch ein Aluminium/PET/PE-Laminat verwendet werden).

Mithilfe des Anfassers soll der Liner vom Testtape in einem Schritt entfernt werden.

Bewertungsschema:
+: Liner lässt sich durch Tab und Bridge zu 100% in einem Schritt vom Testtape entfernen, unabhängig von der Position von Tab und Bridge auf dem Testtape.
o: Liner lässt sich durch Tab und Bridge zu 100% in einem Schritt vom Testtape entfernen, wenn Tab und Bridge direkt am Rand des Testtapes positioniert werden.
-: Liner lässt sich nicht vom Testtape entfernen. Es kommt zum Abriss des Tabs vom Liner oder zum Spalten der einzelnen Schichten des Liners.

### - Kurvenverklebbarkeit

Anwendungstest, ein Klebeband mit einer definierten Breite wird unter leichtem Zug um einen definierten Radius (abhängig von der Breite des Klebebandes, siehe Tabelle 1) verklebt. Das Verkleben erfolgte mit einem Applikator.

**Tabelle 1: Zusammenhang Klebebandbreite - Verklebungskurvenradius**

| Breite des Klebebandes (mm) | Kurvenradius der Verklebung (cm) |
|---|---|
| 6 | 15 |
| 9 | 18 |
| 12 | 21 |
| 15 | 24 |

Bewertung:
+ keine Faltenbildung und kein Abheben des Liners auf der Innenseite des Radius'
- Faltenbildung oder Abheben des Liners auf der Innenseite des Radius'

### - Abzugskraft (Liner Removal Force):

Dieser Test dient der Bestimmung der Kraft, die benötigt wird, um den Liner von einer auf ihm aufgebrachten Klebmasse abzuziehen. Er betrifft im Wesentlichen die Wechselwirkung zwischen der Silikon-Releaseschicht und der darauf aufliegenden Haftklebmasse.

Die Abzugskraft der Liner wurde mit dem 2 cm breiten, doppelseitigen Klebeband tesa® ACXplus 7812 bestimmt.

### Probenvorbereitung:

Ein 30 cm langer Streifen des Klebebandes wurde mit der beim Abrollen freigelegten Seite auf die silikonisierte Seite (Liner 1-5 und 7) bzw. eine Seite des Liners (Liner 6) aufgeklebt und durch 10-maliges Überrollen mit einer 150 g-Stahlrolle definiert angedrückt. Dann wurde das Muster entlang der aufgeklebten Klebebandstreifen in Streifen geschnitten und die so hergestellten Proben vor der Messung eine Woche liegend bei Raumtemperatur gelagert.

### Messung:

Der Liner auf der nicht verklebten Seite des auf dem zu untersuchenden Liner befindlichen Klebebandes wurde entfernt und die Probe mit der freigelegten Klebschicht auf einer PE-Trägerplatte fixiert. Das Fixieren erfolgte so, dass ein kurzes Stück des zu untersuchenden Liners über die Platte hinaus ragte. Die Prüfplatte wurde dann, mit dem verlängerten Ende des zu untersuchenden Liners nach unten weisend,

in die untere Klemmbacke einer Zugprüfmaschine (BZ2.5/TN1S, Fa. Zwick) eingespannt. Das verlängerte Ende des zu untersuchenden Liners wurde in die obere Backe geklemmt und mit einer Maschinengeschwindigkeit von 300 mm/min in einem Winkel von 180° abgezogen.

### - Abrollkraft:

Mit diesem Test wird die Kraft bestimmt, die erforderlich ist, um ein mit dem Liner versehenes und zu einer Rolle aufgewickeltes Klebeband abzurollen. Er betrifft im Wesentlichen die Wechselwirkung zwischen der nicht silikonisierten Seite des Liners und der Klebmasse, die nur im aufgerollten, nicht aber im entrollten Zustand miteinander in Kontakt stehen.

Als Testklebeband wurde das 2 cm breite, doppelseitige Klebeband tesa® ACXplus 7812 verwendet. Die diesem (Transfer-)Klebeband zugrunde liegende Polyacrylat-Haftklebmasse wurde gemäß dem unter "Beschichtbarkeit der Liner mit Klebmasse" beschriebenen Verfahren auf die silikonisierte Seite der zu prüfenden Liner 1-5 und 7 bzw. auf eine Seite des Liners 6 als Schmelze aufgebracht und der Lagerung/Reifung unterzogen. Die derart erhaltenen, mit den zu prüfenden Linern versehenen Klebebänder wurden zu Rollen aufgewickelt, die 16 h im Prüfklima (23 °C, 50 % rel. Feuchte) klimatisiert wurden. Die ersten drei Windungen jeder Rolle wurden verworfen.

Die Klebebandrolle wurde mit einem passenden Aufsteckdorn in der unteren Klemmbacke einer mit einer Abwickelvorrichtung versehenen Zugprüfmaschine befestigt. Das Klebebandende wurde in der oberen Klemmbacke befestigt. Anschließend wurde die Maschine gestartet. Das Klebeband wurde mit einer Abzugsgeschwindigkeit von 300 mm/min entrollt, wobei über eine Strecke von 230 mm die Kraft gemessen wurde. Der Mittelwert aus allen erfassten Messpunkten wurde auf die Klebebandbreite bezogen und als Ergebnis angegeben.

Es wurden grundsätzlich niedrige Abrollkräfte angestrebt. Ein Wert von 185 cN/cm wird als oberer Grenzwert der Abrollkraft angesehen, bei höheren Abrollkräften ist der Abrollvorgang nicht mehr hinreichend praktikabel.

### Ergebnisse der Prüfungen

**Tabelle 2: Ergebnisse**

| Prüfkriterium | Prüfmethode | Liner 1 | Liner 1a | Liner 1b Liner 2 | |
|---|---|---|---|---|---|
| Beschichtbarkeit | Beschichtbarkeit der Liner mit Klebmasse | problemlos beschichtbar | problemlos beschichtbar | problemlos beschichtbar | problemlos beschichtbar |
| Verbundhaftung | Delaminieren | | | | |
| Anfangspeak (N/cm) | | 22,0 | 21,7 | 22,3 | 20,7 |
| Trennkraft (N/cm) | | 11,2 | 11,5 | 11,1 | 10,9 |
| Kraft bei 10% Dehnung (md) [N/mm²] | Kraft-Dehnungs-Verhalten nach DIN 527-1 | 20,1 | 18,9 | 22,5 | 19,3 |
| Bruch kraft (md) [N/mm²] | Kraft-Dehnungs-Verhalten nach DIN 527-1 | >25 | >25 | >25 | >25 |
| Max. Dehnung (md) [%] | Kraft-Dehnungs-Verhalten nach DIN 527-1 | >1200 | >1200 | >1200 | >1200 |
| Anwendbarkeit | Anwendungstechnischer Test (Tabbing Test) | + | + | + | + |
| Kurvenverklebbarkeit | | + | + | + | + |
| Trennkraft (cN/cm) 300 mm/min | Abzugskraft | 18 | 20 | 15 | 16 |
| Abrollkraft (cN(cm) 300 mm/min | Abrollkraft | 110 | 105 | 112 | 109 |

**Tabelle 3: Ergebnisse**

| Prüfkriterium | Prüfmethode | Liner 3 | Liner 4 | Liner 5/6 | Liner 7 |
|---|---|---|---|---|---|
| Beschichtbarkeit | Beschichtbarkeit der Liner mit Klebmasse | problemlos beschichtbar | problemlos beschichtbar | nicht hinreichend beschichtbar* | problemlos beschichtbar |
| Verbundhaftung | Delaminieren | | | | |
| Anfangspeak (N/cm) | | 8,6 | 5,8 | 17,8 | 22,2 |
| Trennkraft (N/cm) | | 3,4 | 2,8 | 10,5 | 10,8 |
| Kraft bei 10% Dehnung (md) [N/mm²] | Kraft-Dehnungs-Verhalten nach DIN 527-1 | 16,7 | 22,6 | 17,2 | 20,5 |
| Bruchkraft (md) [N/mm²] | Kraft-Dehnungs-Verhalten nach DIN 527-1 | 36,2 | > 25 | >25 | >25 |
| Max. Dehnung (md) [%] | Kraft-Dehnungs-Verhalten nach DIN 527-1 | 1170 | >1200 | >1200 | >1200 |
| Anwendbarkeit | Anwendungstechnischer Test (Tabbing Test) | o | - | + | + |
| Kuvenverklebbarkeit | | + | + | + | + |
| Trennkraft (cN/cm) 300 mm/min | Abzugskraft | 16 | 17 | - | 18 |
| Abrollkraft (cN(cm) 300 mm/min | Abrollkraft | 102 | 130 | - | 180 |

| | | | | | |
|---|---|---|---|---|---|
| * Liner 5: Faltenbildung im Beschichtungsprozess, Temperaturstabilität der Folie nicht ausreichend Liner 6: Aufschmelzen der LDPE-Schicht beim Beschichten, in der Folge Versiegeln der LDPE-Schicht mit der Klebmasse | | | | | |

## Patentansprüche

1. Releaseliner zur Verwendung auf Haftklebmassen, umfassend
- eine außen liegende Silikon-Releaseschicht (SR);
- eine Lage (POL), enthaltend in jeder ihrer Schichten zu insgesamt mindestens 50 Gew.-%, jeweils bezogen auf das Gesamtgewicht der Schicht, ein oder mehrere Polyolefine, wobei die Lage (POL) zu mindestens 60 Gew.-%, bezogen auf das Gesamtgewicht der Lage (POL), Polypropylen enthält; und
- eine außen liegende Schicht (PER), enthaltend zu mindestens 80 Gew.-%, bezogen auf das Gesamtgewicht der Schicht (PER), Polyethylen,
wobei die Schicht (PER) durch einen Klebstoff mit der im Aufbau des Releaseliners nächstfolgenden Schicht verbunden ist und
das Polyethylen der Schicht (PER) ein low density-Polyethylen (LDPE) ist und eine Dichte von weniger als 0,925 g/m³ hat.

2. Releaseliner gemäß Anspruch 1, **dadurch gekennzeichnet, dass** die Schicht (PER) aus einer LDPE-Folie mit einer Dicke von 10 bis 45 µm besteht.

3. Releaseliner gemäß mindestens einem der vorstehenden Ansprüche, **dadurch gekennzeichnet, dass**
die Lage (POL) eine Schicht (PPK), enthaltend zu mindestens 80 Gew.-% Polypropylen, umfasst.

4. Releaseliner gemäß Anspruch 3, **dadurch gekennzeichnet, dass** die Lage (POL) eine Polyolefinschicht (POK), enthaltend mindestens 25 Gew.-% Poylethylen sowie mindestens 20 Gew.-% Polypropylen, jeweils bezogen auf das Gesamtgewicht der Polyolefinschicht (POK), umfasst.

5. Releaseliner gemäß Anspruch 4, **dadurch gekennzeichnet, dass** die Lage (POL) eine Schicht (PPK) umfasst, auf deren Ober- und Unterseite jeweils eine Schicht (POK) in unmittelbarem Kontakt zu der Schicht (PPK) angeordnet ist.

6. Releaseliner gemäß Anspruch 4, **dadurch gekennzeichnet, dass** die Lage (POL) eine Polyolefinschicht (POK) umfasst, auf deren Ober- und Unterseite jeweils eine Schicht (PPK) in unmittelbarem Kontakt zu der Polyolefinschicht (POK) angeordnet ist.

7. Releaseliner gemäß mindestens einem der vorstehenden Ansprüche, **dadurch gekennzeichnet, dass**
auf zumindest einem Teil der Schicht (PER) eine Anfasshilfe aufgebracht ist.

8. Verwendung eines Releaseliners gemäß mindestens einem der vorstehenden Ansprüche als Substrat einer Beschichtung mit der Schmelze einer Poly(meth)acrylat-basierten Haftklebmasse, wobei die Silikon-Releaseschicht (SR) beschichtet wird.

## Claims

1. Release liner for use on pressure-sensitive adhesives, comprising
- an externally situated silicone release layer (SR) ;
- a layer system (POL) comprising, in each of its layers, based in each case on the total weight of the layer, a total of at least 50% by weight of one or more polyolefins,
where the layer system (POL) comprises, based on the total weight of the layer system (POL), at least 60% by weight of polypropylene; and
- an externally situated layer (PER) comprising, based on the total weight of the layer (PER), at least 80% by weight of polyethylene,
where an adhesive bonds the layer (PER) to the next subsequent layer in the structure of the release liner, and
the polyethylene of the layer (PER) is a low-density polyethylene (LDPE) and has a density of less than 0.925 g/m³.

2. Release liner according to Claim 1, **characterized in that**
the layer (PER) consists of an LDPE film with thickness from 10 to 45 µm.

3. Release liner according to at least one of the preceding claims, **characterized in that** the layer system (POL) comprises a layer (PPK) comprising at least 80% by weight of polypropylene.

4. Release liner according to Claim 3, **characterized in that**
the layer system (POL) comprises a polyolefin layer (POK) comprising at least 25% by weight of polyethylene and at least 20% by weight of polypropylene, based in each case on the total weight of the polyolefin layer (POK).

5. Release liner according to Claim 4, **characterized in that**
the layer system (POL) comprises a layer (PPK), and respectively a layer (POK) arranged on the upper side and underside of, and in direct contact with, the layer (PPK).

6. Release liner according to Claim 4, **characterized in that**
the layer system (POL) comprises a polyolefin layer (POK), and respectively a layer (PPK) arranged on the upper side and underside of, and in direct contact with, the polyolefin layer (POK).

7. Release liner according to at least one of the preceding claims, **characterized in that** applied on at least a portion of the layer (PER) there is a grip aid.

8. Use of a release liner according to at least one of the preceding claims as substrate of a coating with the melt of a poly(meth)acrylate-based pressure-sensitive adhesive, where the silicone release layer (SR) is coated.

## Revendications

1. Doublure antiadhésive pour une utilisation sur des masses adhésives de contact, comprenant
- une couche antiadhésive de silicone (SR) extérieure ;
- une structure stratifiée (POL), contenant dans chacune de ses couches un total d'au moins 50 % en poids, chacun par rapport au poids total de la couche, d'une ou plusieurs polyoléfines,
la structure stratifiée (POL) contenant du polypropylène à raison d'au moins 60 % en poids, par rapport au poids total de la structure stratifiée (POL) ; et
- une couche extérieure (PER) contenant du polyéthylène à raison d'au moins 80 % en poids, par rapport au poids total de la couche (PER),
la couche (PER) étant, à l'aide d'un adhésif, liée à la couche suivante de la structure de la doublure antiadhésive et
le polyéthylène de la couche (PER) étant un polyéthylène basse densité (PEBD), et présentant une masse volumique inférieure à 0,925 g/m³.

2. Doublure antiadhésive selon la revendication 1, **caractérisée en ce que** la couche (PER) est constituée d'une feuille de PEBD ayant une épaisseur de 10 à 45 µm.

3. Doublure antiadhésive selon au moins l'une des revendications précédentes, **caractérisée en ce que** la structure stratifiée (POL) comprend une couche (PPK) contenant du polypropylène à raison d'au moins 80 % en poids.

4. Doublure antiadhésive selon la revendication 3, **caractérisée en ce que** la structure stratifiée (POL) comprend une couche de polyoléfine (POK), contenant au moins 25 % en poids de polyéthylène ainsi qu'au moins 20 % en poids de polypropylène, chacun par rapport au poids total de la couche de polyoléfine (POK).

5. Doublure antiadhésive selon la revendication 4, **caractérisée en ce que** la structure stratifiée (POL) comprend une couche (PPK) sur chacune de la face supérieure et de la face inférieure de laquelle est disposée une couche (POK) en contact direct avec la couche (PPK).

6. Doublure antiadhésive selon la revendication 4, **caractérisée en ce que** la structure stratifiée (POL) comprend une couche de polyoléfine (POK) sur chacune de la face supérieure et de la face inférieure de laquelle est disposée une couche (PPK) en contact direct avec la couche de polyoléfine (POK).

7. Doublure antiadhésive selon au moins l'une des revendications précédentes, **caractérisée en ce qu'**une aide à la préhension est appliquée sur au moins une partie de la couche (PER).

8. Utilisation d'une doublure antiadhésive selon au moins l'une des revendications précédentes comme substrat d'un revêtement avec une masse fondue d'une masse d'adhésif de contact à base de poly(méth)acrylate, la couche antiadhésive de silicone (SR) étant revêtue.
